Europäisches Patentamt

European Patent Office

Office européen des brevets

(11) Veröffentlichungsnummer: **0 508 253 A1**

## (12) EUROPÄISCHE PATENTANMELDUNG

(21) Anmeldenummer: **92105433.4**

(22) Anmeldetag: **30.03.92**

(51) Int. Cl.5: **F26B 3/30**, F26B 13/20

(30) Priorität: **12.04.91 CH 1104/91**

(43) Veröffentlichungstag der Anmeldung:
**14.10.92 Patentblatt 92/42**

(84) Benannte Vertragsstaaten:
**AT BE CH DE ES FR GB IT LI NL SE**

(71) Anmelder: **VAN BRANDWIJK SYSTEMS PROGRAMMING B.V.**
**Javastraat 107**
**NL-2585 AH 's-Gravenhage(NL)**

(72) Erfinder: **Baldinger, Hansjörg**
**am Schützenweg 7**
**CH-5702 Niederlenz(CH)**

(74) Vertreter: **Patentanwälte Schaad, Balass & Partner**
**Dufourstrasse 101 Postfach**
**CH-8034 Zürich(CH)**

(54) **Verfahren und Vorrichtung zur Wärmebehandlung einer mit einer flüssigen oder pastenförmigen Zubereitung versehenen Warenbahn.**

(57) Prepregs werden in einer vertikalen Behandlungskammer (1) durch Wärmebehandlung einer mit einem härtbaren Harz imprägnierten Warenbahn (7) hergestellt. In dieser Behandlungskammer (1) wird die Warenbahn (7) mit Warmluft angeblasen und mit Strahlungswärme beaufschlagt. Die Anblasluft erwärmt die Warenbahn und transportiert die Lösungsmitteldämpfe weg. Die Anblasbereiche (3 und 27) sind in Warenbahn-Transportrichtung abwechselnd mit Stranlungsheizbereichen (11, 12, 28, 29) angeordnet.

Fig.1

Die Erfindung betrifft ein Verfahren zur Wärmebehandlung einer mit einer flüssigen oder pastenförmigen Zubereitung versehenen Warenbahn und eine Vorrichtung zur Durchführung eines derartigen Verfahrens nach dem Oberbegriff von Anspruch 1 bzw. Anspruch 12.

Ein derartiges Verfahren und eine derartige Vorrichtung sind aus der GB-PS 12 34 956 bekannt. Bei dem vorbekannten Verfahren wird eine mit einer flüssigen Zubereitung versehene Warenbahn in einer Behandlungskammer mittels Wärmestrahlung und Warmluft behandelt. Die Behandlungskammer ist vertikal angeordnet. Die Warenbahn läuft in der Form eines umgekehrten U durch die Behandlungskammer hindurch. Die Behandlungsluft wird im Gegenstrom zur Warenbahn geführt. Sie wird am unteren Ende der Behandlungskammer eingeblasen. In der Behandlungskammer ist auf jeweils beiden Seiten der Warenbahn eine Vielzahl von Heizrohren angebracht, die von heissem Dampf durchströmt werden.

Die Warmluft dient dabei zum Verdampfen von Lösungsmittel und zum Wegtransport desselben. Die Warmluft wirkt aber nicht durch unmittelbares Anblasen der Warenbahn, was wirkungsvoller ist, aber Schwierigkeiten hinsichtlich der Erzielung einer optimal gleichmässigen Temperaturverteilung über die Fläche der Warenbahn bereitet. Eine gleichmässige Temperaturverteilung ist beispielsweise für die Aushärtung einer entsprechend behandelten Warenbahn entscheidend. Bei auf diese Weise hergestellten Produkten für die Elektronik-Industrie vermag eine solche Anlage den heute gestellten hohen Anforderungen nicht mehr zu genügen.

Eine vertikale Warenbannführung durch eine Behandlungskammer ist ferner aus der JP-PS 56-36352 bekannt. Die Behandlungskammer enthält auf gegenüberliegenden Seiten der Warenbahn nur Luftdüsenaustritte an der Seite je einer Warmluft führenden Leitung. Auch diese Einrichtung besitzt den Nachteil, dass die Gleichmässigkeit der Temperaturverteilung hohen Anforderungen nicht genügt.

Aus der gleichen Druckschrift ist eine weitere Ausführungsform einer Behandlungskammer bekannt, in welcher nur Strahlungswärme zum Einsatz gelangt. Hier fehlt nun wieder das Medium Luft, die bei vielen Behandlungsarten das einzig geeignete Mittel zum Verdunsten und Wegtransport eines Lösungsmittels ist, wenn die Warenbann mit einer ein solches Lösungsmittel enthaltenden flüssigen oder pastenförmigen Zubereitung versehen ist.

Der Erfindung lag daher die Aufgabe zugrunde, ein Verfahren zu entwickeln und eine entsprechende Vorrichtung zu schaffen, mit denen sich die Nachteile der vorbekannten Einrichtungen beseitigen lassen und sich durch Behandlung einer Warenbahn ein Produkt herstellen lässt, das den höchsten Qualitätsanforderungen genügt, was bei der Behandlung eine optimale Gleichmässigkeit der Temperaturverteilung und auch eine regelbare Temperatureinwirkung auf die Warenbahn voraussetzt. Dabei wurde es auch zur Aufgabe gemacht, für die Herstellung von Produkten, die hohen Anforderungen an die Qualität genügen, eine Behandlungskammer mit den notwendigen Einrichtungen in bezug auf den Herstellungsaufwand wie auch in bezug auf einen sparsamen Energieverbrauch im Betrieb vorteilhaft herstellen zu können.

Erfindungsgemäss wird diese Aufgabe durch die kennzeichnenden Merkmale von Anspruch 1 bzw. Anspruch 12 gelöst. Bevorzugte Ausführungsformen der Erfindung sind Gegenstand der Ansprüche 1 bis 11 und 13 bis 23.

Das Prinzip des empfindungsgemässen Verfahrens und der Vorrichtung besteht darin, dass sich in der vertikalen Transportrichtung der Warenbann Zonen der Beaufschlagung mit Warmluft und Zonen der Einwirkung von Strahlungswärme auf die Warenbann abwechselnd aufeinander folgen. Nicht ausreichend gleichmässige Wärmeverteilung in den Warmluftzonen wird in den nachfolgenden Zonen mit gleichmässig über die ganze Warenbahnbreite einwirkender Strahlungswärme korrigiert. Die Warmluft wird von gegenüberliegenden Seiten in Transportrichtung zueinander versetzt gegen die Warenbann geblasen, um die Warenbann nach dem beim Schwebetrockner angewendeten Prinzip zu stabilisieren. Diese Warmluftzonen sind quasi berührungsfreie Führungsmittel für eine lange Warenbahn, die auch bei grosser Warenbahnlänge aufgrund dieser Führungsmittel durch einen relativ engen Zwischenraum zwischen gegenüberliegend angeordneten Stranlungsheizkörpern hindurchgeführt werden kann, so dass aufgrund dieser sehr dicht gegenüberstehenden Strahlungsheizkörper eine intensive Wärmeeinwirkung erfolgt und der Energieaufwand entsprechend niedrig gehalten werden kann.

Es wurde festgestellt, dass die auf die bewegte Warenbann abwechselnd einwirkende Strahlungswärme und Warmluft bei einer entsprechend behandelten Warenbann zu einer sehr gleichmässigen Härtungsreaktion führt, was vorrangig angestrebt ist.

Das erfindungsgemässe Verfahren ist insbesondere zur Herstellung von Prepregs geeignet. Bei einem Prepreg handelt es sich um ein mit einem härtbaren Harz versehenes Flächengebilde, auf dem das in Form einer Lösung oder Dispersion aufgebrachte Kunstharz bis zu einem bestimmten Grad durch eine chemische Reaktion ausgehärtet ist. Die verwendungstechnischen Eigenschaften eines Prepregs werden durch den Härtungszustand bestimmt, so dass die Härtungsreaktion sehr sorgfältig und genau zum gewünschten Härtungsgrad geführt werden muss. Insbesondere ist eine konstante Qualität und damit ein konstanter Härtungsgrad über das ganze Flächengebilde erwünscht.

Bisher wurden derartige Prepregs in sogenannten Schwebetrocknern hergestellt, in denen die Warenbahn durch den Luftstrom in der Schwebe gehalten wird. Wie bereits erwähnt, lässt sich aber eine gleichmässige Temperaturverteilung über die Breite der Warenbahn mit einem Luftstrom nicht befriedigend erzielen. Der Aushärtungsgrad hängt jedoch nicht nur von der Temperatur sondern auch von der Luftgeschwindigkeit ab, mit der die Wärme auf die Warenbahn auftrifft. Wenn daher bei einer grossen Warenbreite von beispielsweise 3 m die Luftgeschwindigkeit um +/- 3 % variiert, ist die sich ergebende Variation im Aushärtungsgrad des Prepregs nicht mehr akzeptabel.

Das erfindungsgemässe Verfahren und die Vorrichtung sind auch zur Wärmebehandlung anderer Warenbahnen einsetzbar, die einseitig oder beidseitig zu behandeln sind. Als Warenbahnen kommen beispielsweise Vliese, Gewebe, Metallbahnen wie Stahl und Aluminium, hochtemperaturbeständige Kunststofffolien in Frage. Bei den auf die Warenbahn aufgebrachten Materialien oder Zubereitungen kann es sich um Acrylpolymere, Polyvinylchlorid, Polyurethan, Melaminharze etc. handeln. Das Produkt kann dann eine lackierte oder bedruckte Metallbahn oder Kunststoffolie, ein Dekormaterial, Bodenbelag, Kunstleder oder veredeltes Papier sein.

Die Erfindung ist sowohl zur Herstellung von Fertigprodukten als auch für die Herstellung von Halbzeugen geeignet.

Eine vorteilhafte Ausgestaltung der Erfindung zeichnet sich dadurch aus, dass die Warenbahn in der Behandlungskammer zunächst angeblasen und dann mit Strahlungswärme beaufschlagt wird. Es ist aber auch möglich, dass die Warenbann nach einer anderen bevorzugten Ausführungsform in der Behandlungskammer zunächst mit Strahlungswärme beaufschlagt und anschliessend angeblasen wird.

Besonders vorteilhaft ist es, wenn die Warenbahn in der Behandlungskammer abwechselnd mit warmer Luft angeblasen und mit Strahlungswärme beaufschlagt wird.

Die Warenbann kann im selben Anblasbereich abwechselnd von beiden Seiten mit warmer Luft angeblasen werden.

Wenn auf beiden Seiten der Warenbahn Strahlungsheizkörper vorgesehen werden, ist es deshalb vorteilhaft, zumindest einen davon wegfahrbar auszugestalten. Beim Einführen der Warenbahn wird dieser Strahlungsheizkörper weggefahren, der Abstand zwischen beiden Strahlungsheizkörpern also vergrössert, so dass die Warenbahn einwandfrei eingeführt werden kann. Während des Betriebs wird der Abstand dann wieder verkleinert. Bei der Nachrüstung eines bereits vorhandenen Strahlungtrockners ist es aufwendig bzw. schwierig, einen wegfahrbaren Strahler anzubringen. Es ist dann vorteilhaft, lediglich einen Strahlungsheizkörper vorzusehen, so dass das oben geschilderte Problem beim Einführen der Warenbahn überhaupt nicht auftritt.

Nach einer weiteren vorteilhaften Weiterbildung wird die Warenbahn gleichzeitig von beiden Seiten mit Strahlungswärme beaufschlagt. Es sind also beidseitig der Warenbann Strahlungsheizkörper vorgesehen. Vorzugsweise ist zumindest einer dieser beiden Strahlungsheizkörper wegfahrbar. Durch die beidseitige Bestrahlung wird die Strahlungsheizung verdoppelt, die Vorrichtung also entsprechend effektiver.

Nach einer weiteren vorteilhaften Weiterbildung wird die Warenbahn ueber ihre Breite mit Strahlungswärme unterschiedlicher Temperatur erwärmt, vorzugsweise mit Strahlungswärme dreier unterschiedlicher Temperaturen. Die Strahlungsheizkörper weisen also quer zur Bewegungsrichtung der Warenbahn mehrere, vorzugsweise drei Zonen auf, deren Temperatur voneinander unabhängig regelbar ist. Dadurch, dass die Strahlungsheizkörper über die Breite der Behandlungskammer in einzelne, individuell steuerbare Zonen unterteilt sind, d.h. dass die Warenbahn über ihre Breite von den Strahlungsheizkörpern mit unterschiedlichen Wärmemengen beaufschlagt wird, kann die Vergleichmässigung der Härtungsreaktion und mithin des Härtungsgrades weiter erhöht werden. Die bisherigen Erfahrungen haben gezeigt, dass die Unterteilung in drei unterschiedliche Temperaturzonen bis zu einer Warenbahnbreite von 1,3 bis 2,0 m ausreicht. Ab einer Warenbahnbreite von 2,0 m kann es vorteilhaft sein, vier oder mehr Temperaturzonen vorzusehen. Je mehr Temperaturzonen vorgesehen werden, desto besser ist die Wärmezuführung über die Breite der Warenbahn steuerbar, desto aufwendiger wird allerdings auch die Anordnung.

Vorteilhaft ist es, wenn die Strahlungstemperatur höher, vorzugsweise mindestens 15°C höher ist als die Lufttemperatur. Um diese erhöhte Temperatur aufrechterhalten zu können, ist es vorteilhaft, wenn der Strahlungsheizkörper eine Wärmespeicherfähigkeit besitzt. Dies kann mit reinen Elektroheizkörpern nicht erreicht werden, wohl aber mit Heizplatten, vorzugsweise aus Metall, die eine Wärmespeicherfähigkeit haben. Die Platten können beispielsweise auf ihrer der Warenbann abgewandten Seite Rohre aufweisen, die von Oel, Wasser, Dampf oder einer ähnlichen Flüssigkeit durchströmt werden. Auch eine Beheizung der Platten mittels elektrischer Energie ist möglich.

Eine vorteilhafte Weiterbildung der erfindungsgemässen Vorrichtung ist dadurch gekennzeichnet, dass die der Warenbahn zugekehrte Oberfläche des Strahlungsheizkörpers glatt ist.

3

Die Erfindung wird nachfolgend anhand der Figuren 1 bis 3 veranschaulicht. Es zeigen schematisch:

Figur 1      die vertikale Anordnung der wesentlichen Elemente in einer erfindungsgemässen Anlage, in Ansicht von der Schmalseite;

Figur 2      die Anlage in Ansicht von der Breitseite;

Figur 3      einen Schnitt durch die erfindungsgemässe Anlage quer zur Förderrichtung der Warenbahn.

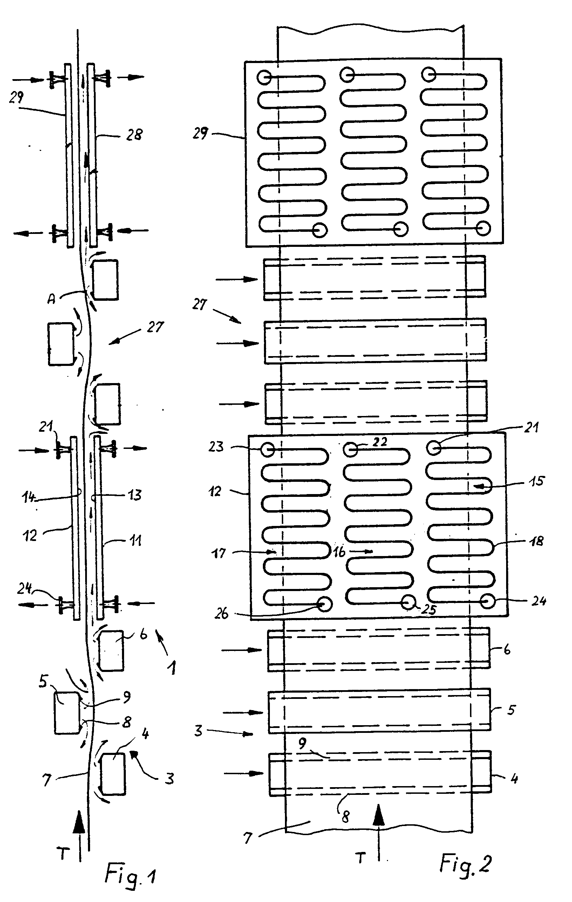

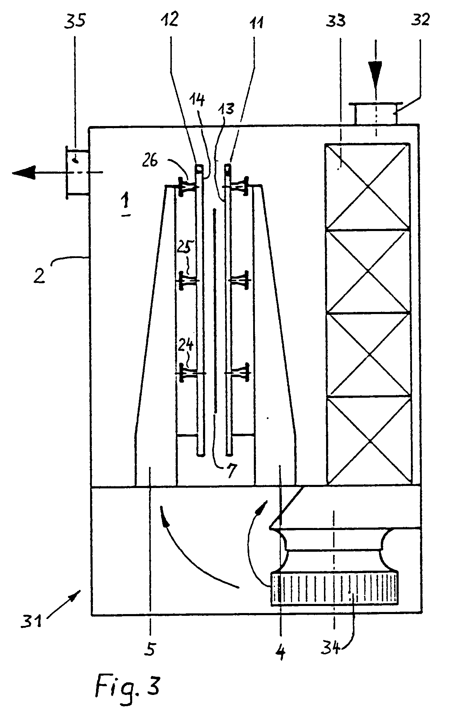

Gleiche Elemente in den Figuren sind mit denselben Bezugszeichen bezeichnet. In der Behandlungskammer 1, deren Wände 2 nur in Figur 3 dargestellt sind, ist eintrittseitig (in den Figuren 1 und 2) eine erste Gruppe 3 von drei Düsenkästen 4, 5, 6 konventioneller Bauart in Querrichtung zur Warenbahn 7 angeordnet. Der eintrittseitig erste Düsenkasten 4 ist in der Zeichnung rechts der Warenbahn 7, der zweite Düsenkasten 5 in Bewegungs- oder Transportrichtung T der Warenbahn versetzt links der Warenbahn 7 und der dritte Düsenkasen 6 wiederum versetzt rechts der Warenbahn angeordnet. Jeder Düsenkasen 5, 6, 7 weist zwei sich in Querrichtung der Warenbann 7 erstreckende Schlitzdüsen 8, 9 auf, durch die je ein schräg gegeneinander und gegen die Warenbahn gerichteter Blasstrahl austritt. Die Luft erwärmt die Warenbahn, bläst Lösungsmittel aus dem Imprägnierharz heraus und transportiert das Lösungsmittel weg. Die Abströmrichtung der Luft ist mit kleinen Pfeilen a veranschaulicht.

Auf die erste Gruppe 3 von Düsenkästen 4, 5, 6 folgen in Transportrichtung T der Warenbahn 7 je ein auf gegenüberliegenden Seiten der Warenbahn 7 angeordneter Strahlungsheizkörper 11, 12 mit je einer glatten ebenen, der Warenbahn 7 zugewandten Stranlungsheizfläche 13, 14. Jeder Strahlungsheizkörper 11, 12 ist quer zur Transportrichtung T in drei einzelne Heizzonen 15, 16, 17 unterteilt (Figur 2). Jede dieser Zonen weist eine eigene, von den anderen unabhängige, Heizschlange 18, 19, 20 mit je einem Heizmitteleintritt 21, 22, 23 und einem Heizmittelaustritt 24, 25, 26 auf. Diese Anordnung erlaubt eine bedarfsgerechte, über die Breite unterschiedliche Erwärmung der Warenbahn und damit Optimierung der Gleichmässigkeit des Härtungsgrades über ihre Fläche. Die dargestellten Heizzonen 16, 17, 18 haben dieselbe Breite. Die Strahlungsheizkörper 11, 12 können jedoch auch in Zonen unterschiedlicher Breite, z.B. zwei breite Aussenzonen und eine schmale Mittelzone oder zwei schmale Aussenzonen und eine breite Mittelzone unterteilt sein. Die Strahlungsheizkörper können auch in nur zwei oder in mehr als drei voneinander unabhängig regelbare Zonen unterteilt sein.

Auf die beiden Stranlungsheizkörper 11, 12 folgt in Transportrichtung T eine weitere Gruppe 27 von drei Düsenkästen in analoger Anordnung wie in der ersten Gruppe 3, worauf zwei weitere, beidseitig der Warenbahn 7 angeordnete Strahlungsheizkörper 28, 29 folgen.

Die Düsenkästen 4, 5, 6 werden vorzugsweise mit einem Gemisch von Frischluft und Umluft gespeist. Eine entsprechende Einrichtung 31 ist in Figur 3 dargestellt. Frischluft wird über einen Frischlufteinlass 32 und Filter 33 über einen Wärmeaustauscher oder einen Direktbrenner einem Umluftventilator 34 zugeführt; mit Umluft vermischt und mit dem Luftgemisch werden die Düsenkästen 4, 5 und 6 gespeist. Die lösungsmittelgeladene Abluft aus dem Inneren der Behandlungskammer 1 wird durch einen Luftaustritt 35 weggeführt. Die Frischluft kann vorgewärmt werden.

Eine Behandlungskammer in einer erfindungsgemässen Anlage kann aus mehreren Einheiten der dargestellten Art von 2 bis 6 m Länge zusammengesetzt sein.

Die Düsenkästen und die Heizplatten können in ihrer Entfernung zur Warenbahn verstellbar angeordnet sein.

Die Düsenkästen können ausser, wie dargestellt, in Dreiergruppen auch in Zweier- bis Sechsergruppen angeordnet sein. Es ist auch möglich, zwischen zwei Strahlungsheizkörpern nur einen einzigen Düsenkasten anzuordnen. Der einzelne Düsenkasten kann sich bei einseitig der Warenbahn angeordneten Strahlungsheizkörpern auf derselben oder der den Heizkörpern gegenüberliegenden Seite der Warenbahn angeordnet sein.

Das erfindungsgemässe Verfahren eignet sich für Warenbannen aus Papier, Vlies oder Geweben und für die bekannten härtbaren Harztypen wie z. B. Phenol-, Epoxy- und Melaminharze.

Die für den jeweiligen Materialtyp erforderlichen Einzelbedingungen in der jeweiligen Anlage sind vom Trägermaterial der Warenbann, vom Harztyp, vom Harzauftrag und vom gewünschten Härtungsgrad abhängig und werden vom Fachmann nach Vorversuchen problemlos eingestellt.

Im allgemeinen wird mit Ausblasgeschwindigkeiten von 5 bis 50 m/sec. gearbeitet. Die Lufttemperatur liegt vorteilhaft 20° bis 25°C unterhalb der Temperatur der Strahlungsheizkörper.

Nachfolgend werden als Beispiel die Betriebsbedingungen bei der erfindungsgemässen Herstellung eines Prepregs angegeben:

| Warenbahn: | Papier 180 g/m2 (roh) |
| Harz: | Phenolharz |
| Harzauftragsgewicht: | 60 % trocken |
| Warenbahngeschwindigkeit: | 40 m/min. |
| Lufttemperatur: | 180°C |
| Luftgeschwindigkeit: | 20 m/sec. |
| Temperatur Strahlungsheizkörper: | 200°C |

**Patentansprüche**

1. Verfahren zur Wärmebehandlung einer mit einer flüssigen oder pastenförmigen Zubereitung versehenen Warenbahn in mindestens einer Behandlungskammer mittels Wärmestrahlung und Warmluft, dadurch gekennzeichnet, dass die im wesentlichen vertikal durch die Behandlungskammer geführte Warenbann in mindestens einem Abschnitt ihrer Transportstrecke mit vorgewärmter Luft angeblasen wird und in mindestens einem weiteren Abschnitt mit Strahlungswärme beaufschlagt wird.

2. Verfahren nach Anspruch 1, dadurch gekennzeichnet, dass die Warenbahn in der Behandlungskammer zunächst angeblasen und dann mit Strahlungswärme beaufschlagt wird.

3. Verfahren nach Anspruch 1, dadurch gekennzeichnet, dass die Warenbahn in der Behandlungskammer zunächst mit Strahlungswärme beaufschlagt und anschliessend angeblasen wird.

4. Verfahren nach einem der vorhergehenden Ansprüche, dadurch gekennzeichnet, dass die Warenbahn in der Behandlungskammer abwechselnd mit warmer Luft angeblasen und mit Strahlungswärme beaufschlagt wird.

5. Verfahren nach einem der vorhergehenden Ansprüche, dadurch gekennzeichnet, dass die Warenbahn im selben Anblasbereich abwechselnd von der einen und von der anderen Seite, in Transportrichtung zueinander versetzt, mit warmer Luft angeblasen wird, um die Warenbahn zu stabilisieren.

6. Verfahren nach einem der vorhergehenden Ansprüche, dadurch gekennzeichnet, dass die Warenbahn einseitig mit Strahlungswärme beaufschlagt wird.

7. Verfahren nach einem der vorhergehenden Ansprüche, dadurch gekennzeichnet, dass die Warenbahn gleichzeitig von einander gegenüberliegenden Seiten mit Strahlungswärme beaufschlagt wird.

8. Verfahren nach einem der vorhergehenden Ansprüche, dadurch gekennzeichnet, dass die Warenbahn über ihre Breite mit Strahlungswärme unterschiedlicher Temperatur beaufschlagt wird.

9. Verfahren nach einem der vorhergehenden Ansprüche, dadurch gekennzeichnet, dass die Warenbahn über ihre Breite mit Strahlungswärme dreier unterschiedlicher Temperaturen beaufschlagt wird.

10. Verfahren nach einem der vorhergehenden Ansprüche, dadurch gekennzeichnet, dass die Strahlungstemperatur höher, vorzugsweise mindestens 15°C höher als die Lufttemperatur ist.

11. Verfahren nach einem der vorhergehenden Ansprüche, dadurch gekennzeichnet, dass eine mit einem härtbaren Harz, insbesondere einem härtbaren Kunstharz, imprägnierte Warenbahn durch die Behandlungskammer gefördert wird.

12. Vorrichtung zur Durchführung des Verfahrens nach einem der vorhergehenden Ansprüche, mit einer Behandlungskammer (1), durch die eine Warenbahn (7) geführt wird und in der Einrichtungen zur Abgabe von auf die Warenbahn einwirkender Wärme angeordnet sind, dadurch gekennzeichnet, dass in der Behandlungskammer (1) längs der vertikalen Transportstrecke der Warenbahn (7) verteilt mindestens ein Strahlungsheizkörper (11, 12, 28, 29) und mindestens eine Luftdüse (8, 9) für Warmluft angeordnet sind.

**13.** Vorrichtung nach Anspruch 12, dadurch gekennzeichnet, dass die Behandlungskammer (1) für einen vertikalen Transport der Warenbann ausgebildet ist.

**14.** Vorrichtung nach einem der Ansprüche 12 oder 13, dadurch gekennzeichnet, dass in Transportrichtung (T) der Warenbahn zunächst eine Luftdüse (3) oder eine Luftdüsenanordnung und anschliessend ein Strahlungsheizkörper (11, 12, 28, 29) angeordnet ist.

**15.** Vorrichtung nach einem der Ansprüche 12 bis 14, dadurch gekennzeichnet, dass in der Behandlungskammer (1) in Transportrichtung (T) der Warenbahn (7) zunächst ein Strahlungsheizkörper (11, 12, 28, 29) und anschliessend eine Luftdüse (27) oder eine Luftdüsenanordnung angeordnet ist.

**16.** Vorrichtung nach einem der Ansprüched 12 bis 17, dadurch gekennzeichnet, dass in der Behandlungskammer (1) in Transportrichtung (T) der Warenbahnn (7) abwechselnd eine Luftdüse oder eine Luftdüsenanordnung (3, 27) und mindestens ein Strahlungsheizkörper (11, 12, 28, 29) angeordnet sind.

**17.** Vorrichtung nach einem der Ansprüche 12 bis 16, dadurch gekennzeichnet, dass die Luftdüsen bzw. Luftdüsenanordnungen (3, 27) quer zur Transportrichtung (T) der Warenbahn (7) verlaufen.

**18.** Vorrichtung nach einem der Ansprüche 12 oder 17, dadurch gekennzeichnet, dass die Luftdüsen (4, 5, 6) in einer Luftdüsenanordnung (3, 27) abwechselnd auf der einen und der gegenüberliegenden Seite der Warenbann angeordnet sind, so dass die Warenbahn in der jeweiligen Luftdüsenanordnung (3, 27) abwechselnd von der einen und der anderen Seite mit warmer Luft angeblasen wird.

**19.** Vorrichtung nach einem der Ansprüche 12 bis 18, dadurch gekennzeichnet, dass in demselben Transportstreckenabschnitt der Warenbahn ein Strahlungsheizkörper nur auf einer Seite der Warenbahn (7) angeordnet ist, so dass die Warenbahn nur einseitig mit Strahlungswärme beaufschlagt wird.

**20.** Vorrichtung nach einem der Ansprüche 12 bis 18, dadurch gekennzeichnet, dass in demselben Transportstreckenabschnitt der Warenbahn je ein Strahlungsheizkörper (11, 12, 28, 29) auf jeder Seite der Warenbann (7) angeordnet ist, so dass die Warenbahn beidseitig mit Strahlundswärme beaufschlagt wird.

**21.** Vorrichtung nach einem der Ansprüche 12 bis 20, dadurch gekennzeichnet, dass die Strahlungsheizkörper (11, 12, 28, 29) quer zur Bewegungsrichtung (T) der Warenbahn (7) mehrere, vorzugsweise drei, Zonen (15, 16, 17) aufweisen, deren Temperatur voneinander unabhängig regelbar ist.

**22.** Vorrichtung nach einem der Ansprüche 12 bis 21, dadurch gekennzeichnet, dass die der Warenbahn zugekehrte Oberfläche der Strahlungsheizkörper (11, 12, 28, 29) glatt ist.

**23.** Vorrichtung nach einem der Ansprüche 12 bis 22, dadurch gekennzeichnet, dass die Strahlungstemperatur des Strahlungsheizkörpers höher, vorzugsweise um mindestens 15ºC höher als die Lufttemperatur ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 809 845 (VALMET PAPER MACHINERY, INC.) * Das ganze Dokument * | 1,2,5,6 ,12,13, 14,16, 17,18, 19 | F 26 B 3/30 F 26 B 13/20 |
| | --- | | |
| X | WO-A-8 904 890 (VALMET OY) * Das ganze Dokument * | 1,3,5,6 ,8,12, 13,15, 17,18, 19,21 | |
| Y | | 4,7,9, 10,11, 22,23 | |
| | --- | | |
| Y | EP-A-0 157 403 (SINTER LTD) * Das ganze Dokument * | 7,9,10, 11,22, 23 | |
| A | | 1,8,12, 13,20 | |
| | --- | | RECHERCHIERTE SACHGEBIETE (Int. Cl.5) |
| Y | EP-A-0 235 723 (VITS) * Das ganze Dokument * | 4 | F 26 B |
| A | | 1,6,7, 12,17, 19,20 | |
| | --- | | |
| X | DE-A-4 029 487 (VALMET PAPER MACHINERY INC.) * Das ganze Dokument * | 1,3,7, 12,13, 15,17, 20 | |
| | --- | -/- | |

Der vorliegende Recherchenbericht wurde für alle Patentansprüche erstellt

| Recherchenort | Abschlußdatum der Recherche | Prüfer |
|---|---|---|
| DEN HAAG | 07-07-1992 | SILVIS H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 924 569   (HUNTER et al.) <br> * Das ganze Dokument * <br><br>--- | 1,3,7, 12,13, 15,17 | |
| A | DE-U-8 703 671   (DIEDRICH METALLBAU) <br> * Das ganze Dokument * <br><br>--- | 1,2,4,6 ,12,14, 16,17, 19 | |
| P,A | EP-A-0 452 867   (VAN BRANDWIJK SYSTEMS PROGRAMMING B.V.) <br> * Das ganze Dokument * <br>--- | 1-23 | |
| A | EP-A-0 291 832   (VITS) <br>--- | | |
| A | GB-A-2 133 526   (SMITH) <br>--- | | |
| A | EP-A-0 346 081   (W.R. GRACE & CO.-CONN.) <br>--- | | |
| A | US-A-3 793 741   (SMITH, Jr.) <br>----- | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 07-07-1992 | SILVIS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

..........................................................

& : Mitglied der gleichen Patentfamilie, übereinstimmendes Dokument

EPO FORM 1503 03.82 (P0403)